# EUROPEAN PATENT APPLICATION

(11) **EP 4 015 427 A1**
(43) Date of publication of application: **22.06.2022**
(21) Application number: 20851379.6
(22) Date of filing: 13.07.2020
(51) Int. Cl.: B65H 27/00, B32B 1/08, B32B 15/18, B32B 15/04, B32B 3/08, B32B 33/00

(54) **COMPOSITE TUBE, MANUFACTURING DEVICE, PROCESS, ROLLER BODY AND USE OF ROLLER BODY**

(30) Priority: 14.08.2019 CN 201910747671
(71) Applicant: Shandong Guangtai Environmental Technology Company Limited, Shandong 264000 (CN)
(72) Inventor: GAO, Yucheng, YanTai, Shandong 264000 (CN)
(74) Representative: Wang, Bo
(86) International application number: PCT/CN2020/101611
(87) International publication number: WO 2021/027460

(57) **Abstract**

The present invention relates to a composite tube, a preparation device, a process, a roller body, and the applications of the roller body. The composite tube comprises an inner tube body and a stainless steel outer tube wrapping around the outside of the inner tube body; the tube diameter difference between the inner diameter of the stainless steel outer tube and the outer diameter of the inner tube body is less than or equal to 1 mm, and the roundness tolerance of the outer diameter of the composite tube is not greater than 0.3 mm. The outer wall of the inner tube body and the inner wall of the stainless steel outer tube can be partially or completely in close contact with each other, eliminating the deformation that the stainless steel outer tube may undergo when in use.

## Description

### TECHNICAL FIELD

The present invention relates to the technical field of composite tube preparation, in particular to a composite tube, a preparation device, a process, a roller body, and the applications of the roller body.

### BACKGROUND

Roller products are often used in machinery equipment such as washing equipment, textile equipment, printing and dyeing equipment, and plastic machines; the traditional guide roller uses electroplating process to treat the steel tube to achieve the purpose of anti-corrosion, but now the electroplating process does not meet the requirements of the increasingly strict environmental protection situation, and the anti-corrosion and anti-rust capability of the electroplating process gradually cannot meet the anti-corrosion requirements of printing and dyeing equipment; in recent years, the market has gradually adopted a composite steel tube made of a stainless steel outer tube and a carbon steel inner tube body to replace the electroplating process; Chinese patent CN103757847A describes a high-precision stainless steel composite cloth guide roller; using a drawn precision welded steel tube as a base tube, which is wrapped by a 304 pure stainless steel thin-walled welded tube, the mechanical performance and surface quality of the cloth guide roller in domestic printing and dyeing equipment is improved.

Roundness refers to the degree to which the cross-section of a workpiece is close to a theoretical circle; roundness is the difference between the maximum radius and the minimum radius; the roundness tolerance is the area between two concentric circles with the tolerance value t as the radius difference; if there is a cylinder with a roundness tolerance of 0.03, it means that a circle on any cross-section of the cylinder must lie between two concentric circles with a distance of 0.03.

With the technological development of machinery equipment, the required length of the roller body gradually increases; the rotating speed gradually increases; and the requirements with respect to the jump of the roller bodies are very high; a significant jump of the roller bodies will cause the cloth to wrinkle and increase the load of the power system; once the cloth wrinkles which causes quality problems or power system failures, it will bring severe losses to the company, and normal companies are afraid to try new products; the roundness tolerance of the roller bodies in practical use must be controlled to be below 0.3 mm to meet the jump requirements; the roller body is made of a stainless steel composite tube; when the tube diameter difference between the inner tube body and the stainless steel outer tube is less than 1.5 mm, the required pushing force in the process of tube entering becomes very strong; once the output power does not reach the predetermined strength or the output power is unstable, causing the tube body to vibrate or even stop in the process of tube entering, it is easy to cause a failure of the tube entering; if the output power is increased, the tube wall of the outer stainless steel tube is thin, which will easily lead to the partial indentation of the tube wall at the fixed end of the tube body; after the indentation, the tube wall of the stainless steel outer tube is unevenly stressed, which will also lead to a failure of the tube entering; therefore, due to the limitation of the accuracy of the existing tube entering apparatus, the roller manufacturers will choose an inner tube body and a stainless steel outer tube with a tube diameter difference of about 2 mm for tube entering.

When the tube diameter difference is 2 mm, on the one hand, even after being drawn, the stainless steel outer tube is still prone to fall off from the inner tube body during use; on the other hand, the roundness of the stainless steel tube does not meet the requirements for use; one is that the thickness of the stainless steel outer tube is small, which is not suitable for lathe processing but only drawing; when the tube diameter difference is 2 mm, even if it has a good roundness after being drawn, the stainless steel outer tube is deformed due to the ductility of the stainless steel outer tube during use, resulting in an increase in the roundness tolerance; under normal circumstances, in order to increase the roundness and reduce the gap between the inner tube body and the stainless steel outer tube, it is generally necessary to increase the number of drawings; however, the existing stainless steel tube is also welded, and the ductility of the welding parts is obviously weaker than that of other parts of the stainless steel tube; if the number of drawings is increased, once the extension of other parts exceeds that of the welding parts, the roundness tolerance of the stainless steel tube will be reduced, and the outer thin wall of the stainless steel composite tube will be easily broken out after repeated drawing.

Reeling round the tube body after the process of tube entering can also increase the roundness of the composite tube; however, as the length of the roller body increases to more than 3 m, the strength requirements of the roller body increase; the wall thickness of the inner tube body is generally more than 4 mm; due to the limitation of the internal expansion force of the reeling round machine, when the wall thickness of the inner tube body is greater than 2.5 mm, the reeling effect is poor; therefore, a close fit between the inner tube body and the stainless steel outer tube cannot be formed by the existing cold drawing technology and reeling round technology, and the composite tube cannot reach the expected roundness tolerance; at present, domestic and foreign companies have not been able to solve this technical problem.

The above roundness requirements for the stainless steel composite tube limit the applications of the stainless steel composite tube; if the stainless steel tube is manufactured by lathe, the company cannot afford the cost; therefore, to a large extent, many companies have begun to turn to traditional carbon steel tubes to achieve the desired roundness; although the requirements for processing technology are reduced, the anti-corrosion effect of carbon steel is poor.

In order to overcome the problems and difficulties brought by the above-mentioned background art, a stainless steel composite and its corresponding manufacturing process are developed.

### SUMMARY OF THE INVENTION

In order to solve the above technical problems, the purpose of the present invention is to provide a composite tube, a preparation device, a process, a roller body, and the applications of the roller body.

According to one aspect of the present invention, there is provided a composite tube, comprising
an inner tube body and a stainless steel outer tube wrapping around the outside of the inner tube body;
the tube diameter difference between the inner diameter of the stainless steel outer tube and the outer diameter of the inner tube body is less than or equal to 1 mm, and the roundness tolerance of the outer diameter of the composite tube is not greater than 0.3 mm.

Compared with the prior art, the present invention has the following beneficial effects:
1. the roundness tolerance of the composite tube is not greater than 0.3 mm, which can be used to prepare a high-quality and high-precision roller body with a small jump amplitude; the tube diameter difference between the inner diameter of the stainless steel outer tube and the outer diameter of the inner tube body is less than or equal to 1 mm, so that the outer wall of the inner tube body and the inner wall of the stainless steel outer tube can be partially or completely in close contact with each other, eliminating the deformation that the stainless steel outer tube may undergo during use;
2. a stainless steel tube is used for the outer layer, which is not only corrosion-resistant, but also can facilitate changing the surface finish according to the application conditions of the existing equipment.

Further, the outer wall of the inner tube body and the inner wall of the stainless steel outer tube are partially or completely in close contact with each other, and the roundness tolerance of the outer diameter of the composite tube is not greater than 0.2 mm.

The above-mentioned further solution has the following beneficial effect: since it is difficult to avoid some unevenness on the tube wall during the production of the inner tube body, when the outer wall of the inner tube body and the inner wall of the stainless steel outer tube are partially or completely in close contact with each other, the inner wall of the stainless steel outer tube can be fitted with the outer wall of the inner tube body and adapted to the convex parts and concave parts of the inner tube body; that is, the wall thickness of the parts of the stainless steel outer tube corresponding to the convex parts of the inner tube body is smaller than that of the parts of the stainless steel outer tube corresponding to the concave parts of the inner tube body, which can improve the close fit between the inner tube body and the stainless steel outer tube, and has a significant effect of improving the roundness tolerance of the composite tube.

Further, the diameter of the composite tube is 40-200 mm; the wall thickness is 4-10 mm; the roundness tolerance is not greater than 0.15 mm.

The above-mentioned further solution has the following beneficial effect: the wall thickness of the composite tube is 4-10 mm, and a tube body that meets the bending resistance requirements can be prepared without excessively increasing the cost; if the wall thickness of the tube body continues to increase, although the strength can be increased, the self-weight of the composite tube will also be increased, resulting in an increase of the centrifugal force on the tube body due to the roundness tolerance when the tube body rotates, which will easily lead to the deformation of the tube body during use.

Further, the wall thickness of the stainless steel outer tube is 0.3-3 mm, and the wall thickness of the inner tube body is not less than 2.5 mm.

The above-mentioned further solution has the following beneficial effect: controlling the thickness of the stainless steel outer tube, one is to save costs, and the other is that it is difficult to use the ductility of the stainless steel outer tube if the thickness is too large, while the thickness of 0.3-3 mm can make good use of the ductility of the stainless steel outer tube, so that after the diameter of the stainless steel outer tube is reduced, a close fit is formed between the inner wall of the stainless steel outer tube and the outer wall of the inner tube body, improving the roundness of the composite tube.

Further, the area of the parts of the outer wall of the inner tube body which are in close contact with the inner wall of the stainless steel outer tube is greater than 50% of the area of the outer wall of the inner tube.

The above-mentioned further solution has the following beneficial effect: it can improve the close fit between the inner tube body and the stainless steel outer tube, which is beneficial to improve the roundness tolerance of the composite tube.

Further, the length of the composite tube is 3-15 m.

The above-mentioned further solution has the following beneficial effect: a roller body with a length of 3-15 m can be prepared in one piece, avoiding the method of adjoining and then welding two tube bodies when preparing a roller body; one is to simplify the roller body preparation process, and the other is to enable the prepared roller body to have excellent deformation resistance.

According to another aspect of the present invention, a composite tube preparation device is provided, comprising a tube entering equipment for a composite tube and a composite tube drawing equipment;

The tube entering equipment comprises a first support member, a second support member, and a tube body pushing device; the first support member and the second support member are axially arranged; the first support member is provided with a groove for placing an inner tube or a stainless steel outer tube; one end of the groove away from the second support member is provided with a base; one end of the base close to the second support member is provided with a tube entering end; the cross-sectional area of the tube entering end gradually decreases from the end being close to the base to the other end; the tube body pushing device can push the inner tube or the stainless steel outer tube to move, so that a relative displacement occurs between the inner tube and the stainless steel outer tube, and the inner tube body is positioned in the stainless steel outer tube.

The composite tube drawing equipment comprises a pulling mechanism, a drawing frame and a drawing die arranged on the drawing frame;

The drawing die comprises a die sleeve and a die core; the die core is provided with a die hole, and the die hole comprises a guide area with a conical structure and a sizing area connected with the guide area;

The angle between the two waistlines of the guide area is 18°-24°, and the length of the sizing area is 25-110 mm.

Compared with the prior art, the present invention has the following beneficial effects:
the tube entering equipment takes the base as a positioning point and the tube body pushing device as a moving point, pushes the tube body to move, and locates the inner tube body in the stainless steel outer tube; one end of the tube body close to the positioning point extends into the tube entering end to prevent the end of the tube body from sinking inward, so that when the tube wall of the tube body placed on the first support member is thin or the compressive strength is weak, the deformation of the end of the tube body such as folds and indentations caused by the pressure in the process of tube entering is reduced; based on this, the output power of the tube body pushing device can be increased, so that the pause and the vibration of the tube body in the process of tube entering can be reduced; the groove can limit the deviation of the tube body with the base as a fulcrum, effectively reducing the failure of tube entering due to a tilt of the tube body in the process of tube entering; if the tube diameter difference between the two tube bodies is not greater than 1.5 mm, the process of tube entering can also be realized; after the process of tube entering, a close fit between the tube wall of the inner tube body and the tube wall of the stainless steel outer tube is good, which enhances the bending strength and product quality of the composite tube;
the composite tube drawing equipment, by changing the angle between the two waistlines of the guide area of the drawing die, makes the tube wall of the inner tube body and the tube wall of the stainless steel outer tube contact each other and form a close fit after being drawn, which is beneficial to increase the strength and roundness of the tube body.

According to another aspect of the present invention, a process for preparing a composite tube is provided, comprising:
step 1: an inner tube body is positioned in a stainless steel outer tube by pressure, wherein the ductility of the stainless steel outer tube is greater than that of the inner tube body, and the tube diameter difference between the inner tube body and the stainless steel outer tube is not greater than 1 mm;
step 2: the stainless steel outer tube is radially compressed, so that the whole stainless steel outer tube undergoes plastic deformation; by the plastic deformation, the tube diameter of the stainless steel outer tube is reduced, and then the stainless steel outer tube and the outer wall of the inner tube body are partially or completely in close contact with each other; and the roundness tolerance of the composited tube body is kept no more than 0.3 mm, then the composite tube is obtained.

Compared with the prior art, the present invention has the following beneficial effects: using the ductility of the stainless steel outer tube, the whole stainless steel outer tube undergoes plastic deformation by radially compressing the stainless steel outer tube, so that a close fit between the inner wall of the stainless steel outer tube and the outer wall of the inner tube body is formed; the obtained composite tube has a good roundness tolerance and small tube body jump, and can be used to produce a high-quality and high-precision roller body.

Further, the stainless steel outer tube is radially compressed by cold drawing to undergo plastic deformation, comprising the following steps:
a. when the inner tube body is positioned in the stainless steel outer tube by pressure, the stainless steel outer tube reserves an exposed part;
b. the composite tube is placed on a composite tube drawing equipment; the composite tube is driven to move towards a drawing die, and the exposed part of the stainless steel outer tube passes through a die hole;
c. a pulling mechanism of a composite tube drawing equipment clamps the exposed part of the stainless steel outer tube, pulls the composite tube through the die hole of the drawing die, and compresses the stainless steel outer tube radially so that the whole stainless steel outer tube undergoes plastic deformation; the length of a sizing area of the die hole is not less than 25 mm, so that by the plastic deformation, the tube diameter of the stainless steel outer tube is reduced and then the stainless steel outer tube and the outer wall of the inner tube are partially or completely in close contact with each other after being drawn.

The above-mentioned further solution has the following beneficial effect: the stainless steel outer tube is radially compressed, so that the whole stainless steel outer tube undergoes plastic deformation; by the plastic deformation, the tube diameter of the stainless steel outer tube is reduced, and then the stainless steel outer tube and the outer wall of the inner tube body are partially or completely in close contact with each other; the length of the sizing area of the die hole is not less than 25 mm; it can eliminate the residual stress of the recovery deformation of the thin wall of the outer layer of the stainless steel composite tube, improve the close fit between the inner tube body and the stainless steel outer tube, and facilitate improving the roundness tolerance of the composite tube.

Further, when the stainless steel outer tube is radially compressed so that the whole stainless steel outer tube undergoes plastic deformation, under the driving of the pulling mechanism, the composite tube passes through the die hole at a constant speed from one end of the composite tube; the die hole radially applies a gradually increasing radial pressure to the stainless steel outer tube, so that the diameter of the stainless steel outer tube is reduced.

The above-mentioned further solution has the following beneficial effect: the die hole radially applies a gradually increasing uniform pressure to the stainless steel outer tube to prevent the stainless steel outer tube from being damaged (such as indentation) due to the sudden large radial pressure on the stainless steel outer tube, and to prevent the stainless steel outer tube from being broken off, thereby improving the drawing quality.

Further, when the inner tube body is positioned in the stainless steel outer tube by pressure, the stainless steel outer tube reserves an exposed part, comprising: one end of the inner tube body is located inside a corresponding end of the stainless steel outer tube; the corresponding end of the stainless steel outer tube is not filled with the inner tube body and is pressed to form a flat exposed part; the width of the exposed part is not greater than the tube diameter of the stainless steel outer tube.

The beneficial effect of adopting the above-mentioned further solution is that it is beneficial to clamp the end of the stainless steel outer tube, which will not damage the tube wall of the stainless steel outer tube, and can prevent the stainless steel outer tube from being disengaged during clamping.

According to another aspect of the present invention, there is provided a roller body, comprising a composite tube according to any one of the above, and shaft heads fixedly connected to both ends of the composite tube; the shaft head comprises a support shaft; the support shaft is axially provided with at least a support member; the support member comprises a body; the body is provided with an arc-shaped connecting member; one end of the arc-shaped connecting member away from the body is provided with a second support plate; the second support plate is inclined to a side away from the support shaft and has an interference fit with the inner wall of the composite tube.

Compared with the prior art, the present invention has the following beneficial effects: the roundness tolerance of the composite tube is good, and it can be used to prepare a roller body with a length of more than 3 m and with good bending resistance; the roller body can better meet the requirements of downstream equipment (such as ironing machines, spreaders and other linen finishing equipment) with respect to the roller body jumping; the arc-shaped connecting member of the support shaft has an elastic effect; the second support plate can support the tube and can be adapted to the change of the tube diameter of the inner wall of the tube by the elastic effect of the arc-shaped connecting member; it can facilitate the installation of the shaft heads; the interference fit can help increase the friction between the shaft heads and the inner tube, preventing the shaft heads from falling off the tube body; when the second support member is in an interference fit with the inner tube, it can prevent the second support plate from deforming the tube, maintain the roundness tolerance of the tube, and prevent the inner tube from being deformed during use; further, it can facilitate changing the surface finish according to the application conditions of the existing equipment by the stainless outer tube.

According to another aspect of the present invention, there is provided any one of an ironing machine, a spreading machine, a cloth feeding machine, a folding machine, and a stacking machine using any one of the above-mentioned roller body.

### DESCRIPTION OF THE DRAWINGS

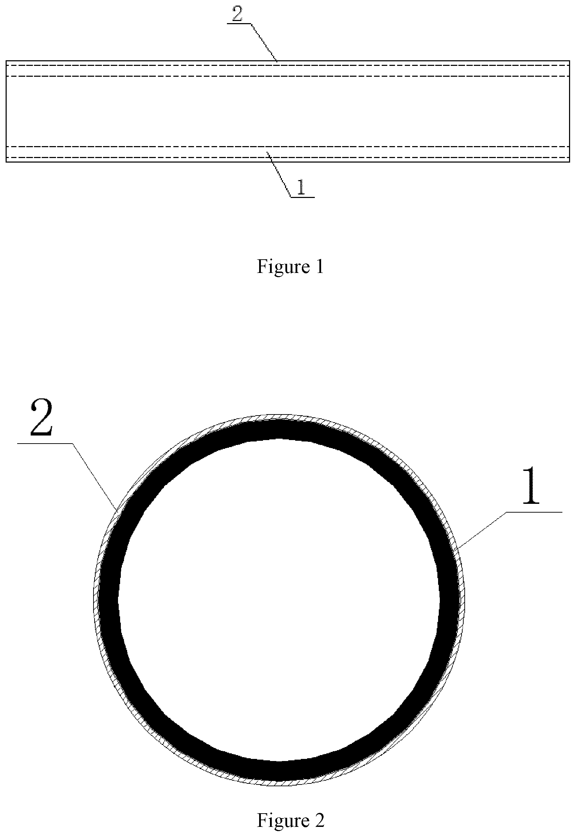

Figure 1 is a schematic diagram of the structure of a composite tube;
Figure 2 is a schematic view of the cross-section of a composite tube;

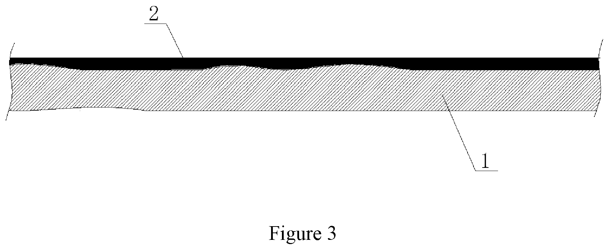

Figure 3 is a schematic view of the longitudinal section of a composite tube;

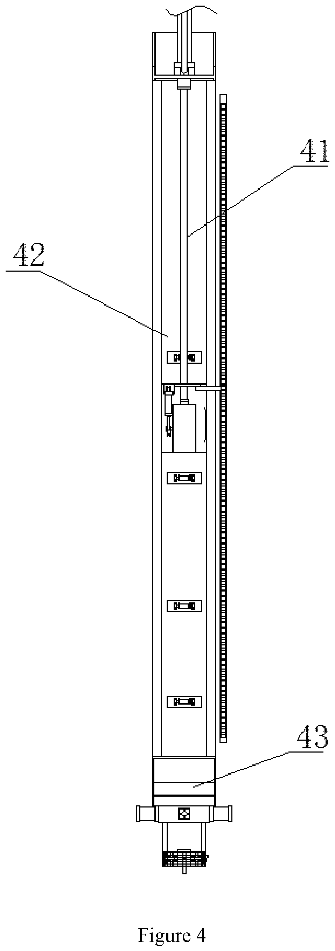

Figure 4 is a schematic diagram of the structure of a composite tube drawing equipment;

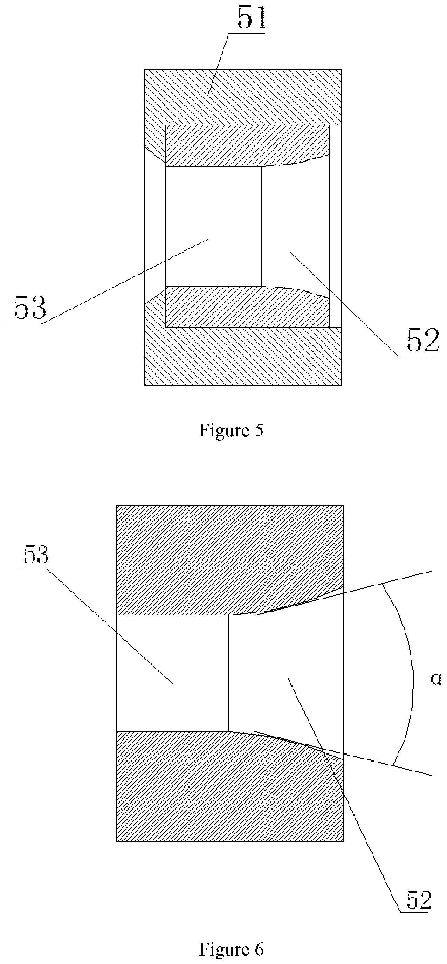

Figure 5 is a schematic diagram of the structure of a drawing die;
Figure 6 is a schematic diagram of the structure of a die core;

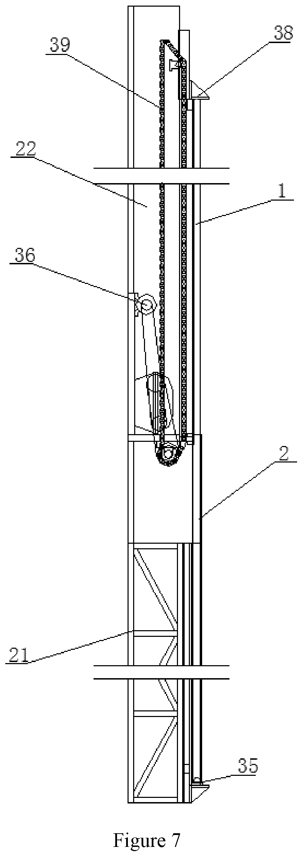

Figure 7 is a schematic diagram of the structure of a tube entering equipment;

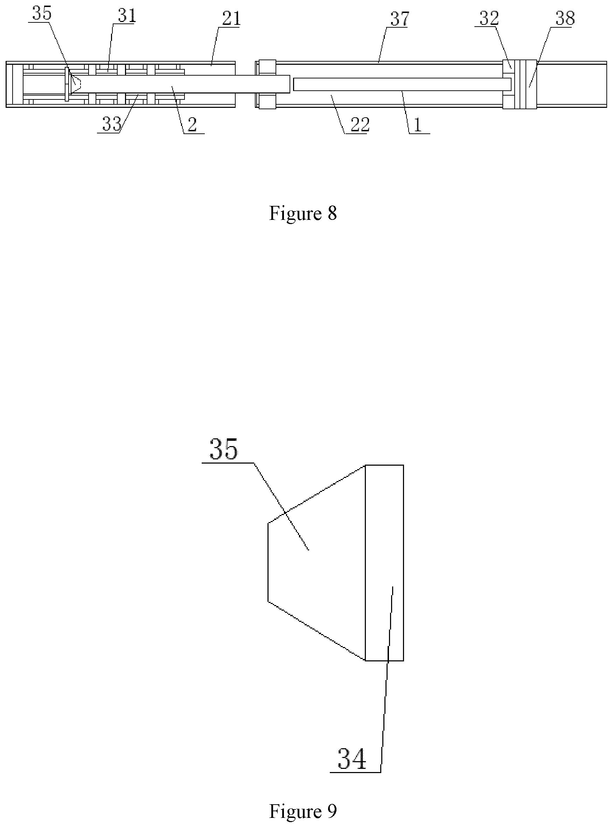

Figure 8 is schematic diagram 1 of a tube entering equipment;
Figure 9 is schematic diagram 2 of a tube entering equipment;

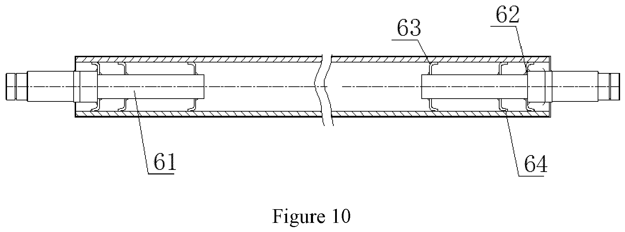

Figure 10 is a schematic diagram of the structure of a tube entering end;
Figure 11 is a schematic diagram of the structure of a roller body.

Reference numbers shown in the drawings:
1 - inner tube body; 2 - stainless steel outer tube; 21 - the first frame; 22 - the second frame;
31 - the first support member; 32 - the second support member; 33 - groove; 34 - base; 35 - tube entering end; 36 - motor; 37 - guide rail; 38 - pushing equipment; 39 - transmission mechanism;
41 - pulling mechanism; 42 - drawing frame; 43 - drawing die;
51 - die sleeve; 52 - guide area; 53 - sizing area;
61 - support shaft; 62 - tube body support member; 63 - arc-shaped connecting member; 64 - the second support plate.

### EMBODIMENTS

In order to better understand the technical solutions of the present invention, the present invention will be further described below with reference to specific embodiments and accompanying drawings.

### Embodiment 1:

This embodiment provides a composite tube; wherein the diameter of the composite tube is 40-200 mm; wherein the length is 3-15 m; wherein the composite tube comprises an inner tube body 1 and a stainless steel outer tube 2 wrapping around the outside of the inner tube body 1; the tube diameter difference between the inner diameter of the stainless steel outer tube 2 and the outer diameter of the inner tube body 1 is less than or equal to 1 mm; 0.3 mm, 0.5 mm, or 0.8 mm can be selected in actual production; the tube diameter difference between the inner tube body 1 and the stainless steel outer tube 2 can be set according to the roundness error of the roller body to be prepared;

The roundness tolerance of the outer diameter of the composite tube is not greater than 0.3 mm; when the wall thickness of the composite tube is between 4 mm and 10 mm, the composite tube has good strength and good bending resistance; wherein the wall thickness of the stainless steel outer tube 2 is 0.3-3 mm, and the wall thickness of the inner tube body 1 is not less than 2.5 mm.

The roundness tolerance of the composite tube is not greater than 0.3 mm, which can be used to prepare a high-quality and high-precision roller body with a small jump amplitude; the tube diameter difference between the inner diameter of the stainless steel outer tube 2 and the outer diameter of the inner tube body 1 is less than or equal to 1 mm, so that the outer wall of the inner tube body 1 and the inner wall of the stainless steel outer tube 2 can be partially or completely in close contact with each other, eliminating the deformation that the stainless steel outer tube 2 may undergo during use.

The preparation system of the composite tube according to the present embodiment comprises a tube entering equipment for a composite tube and a composite tube drawing equipment;

The tube entering equipment comprises a first support member 31, a second support member 32, and a tube body pushing device; the first support member 31 and the second support member 32 are axially arranged; the first support member 31 is provided with a groove 33 for placing an inner tube or a stainless steel outer tube 2; one end of the groove 33 away from the second support member 32 is provided with a base 34; one end of the base 34 close to the second support member 32 is provided with a tube entering end 35; the cross-sectional area of the tube entering end 35 gradually decreases from the end being close to the base 34 to the other end; the tube body pushing device can push the inner tube or the stainless steel outer tube 2 to move, so that a relative displacement occurs between the inner tube and the stainless steel outer tube 2, and the inner tube body 1 can be positioned in the stainless steel outer tube 2; specifically, the tube entering end 35 is conical or hemispherical; further as a preferred option, the tube body pushing device comprises a frame, a guide rail 37 arranged on the frame, a pushing equipment 38 slidably arranged on the guide rail 37, and a transmission mechanism 39 for driving the pushing equipment 38; the transmission mechanism 39 comprises a transmission chain connected with the pushing equipment 38 and a motor 36 for driving the transmission chain to move; through the transmission of the chain, the chain will not be stretched or slipped when pulled by a large external force, and the power can be stably transmitted to the pushing equipment 38, so that the cart can obtain a relatively large and stable driving force; the operation stability of the tube body pushing device can be improved; and the vibration of the tube body can be reduced in the process of tube entering.

The composite tube drawing equipment comprises a pulling mechanism 41, a drawing frame 42, and a drawing die 43 arranged on the drawing frame 42; the frame comprises a first frame and a second frame; the drawing die 43 comprises a die sleeve 51 and a die core; the die core is provided with a die hole; the die hole comprises a guide area 52 with a conical structure and a sizing area 53 connected with the guide area 52;

The angle between the two waistlines of the guide area 52 is 18°-24°, and the length of the sizing area 53 is 25-110 mm; further as a preferred option, the sidewall of the guide area 52 is arc-shaped; the tangent angle a between the two waistlines of the guide area 52 is 18°-24°; the connection between the guide area 52 and the sizing area 53 is a smooth transition; and the diameter of the guide area 52 is not less than that of the sizing area 53.

According to the present embodiment, the tube entering equipment takes the base 34 as a positioning point and the tube body pushing device as a moving point, pushes the tube body to move, and locates the inner tube body 1 in the stainless steel outer tube 2; the end of the tube body close to the positioning point extends into the tube entering end 35 to prevent the end of the tube body from sinking inward, so that when the tube wall of the tube body placed on the first support member 31 is thin or the compressive strength is weak, the deformation of the end of the tube body such as folds and indentations caused by the pressure in the process of tube entering can be reduced; based on this, the output power of the tube body pushing device can be increased, so that the pause and the vibration of the tube body in the process of tube entering can be reduced; the groove 33 can limit the deviation of the tube body with the base 34 as a fulcrum, effectively reducing the failure of tube entering due to a tilt of the tube body in the process of tube entering; if the tube diameter difference between the two tube bodies is not greater than 1 mm, the process of tube entering can also be realized; after the process of tube entering, the close fit between the tube wall of the inner tube body and the tube wall of the stainless steel outer tube 2 is good, which enhances the bending strength and product quality of the composite tube.

The composite tube drawing equipment, by changing the angle between the two waistlines of the guide area 52 of the drawing die 43, makes the tube wall of the inner tube body and the tube wall of the stainless steel outer tube 2 contact each other and form a close fit after being drawn, which is beneficial to increase the strength and roundness of the tube body.

A process for preparing a composite tube according to the present embodiment comprises:
step 1: the inner tube body 1 is positioned in the stainless steel outer tube 2 by pressure, wherein the ductility of the stainless steel outer tube 2 is greater than that of the inner tube body 1, and the tube diameter difference between the inner tube body 1 and the stainless steel outer tube 2 is not greater than 1 mm; wherein, when the inner tube body 1 is positioned in the stainless steel outer tube 2 by pressure, the stainless steel outer tube 2 reserves an exposed part, comprising: one end of the inner tube body 1 is located inside a corresponding end of the stainless steel outer tube 2; the corresponding end of the stainless steel outer tube 2 is not filled with the inner tube body 1, and is pressed to form a flat exposed part; the width of the exposed part is not greater than the tube diameter of the stainless steel outer tube 2.
step 2: the stainless steel outer tube 2 is radially compressed, so that the whole stainless steel outer tube 2 undergoes plastic deformation; by the plastic deformation, the tube diameter of the stainless steel outer tube 2 is reduced, and then the stainless steel outer tube 2 and the outer wall of the inner tube body 1 are partially or completely in close contact with each other; and the roundness tolerance of the composited tube body is kept no more than 0.3 mm, then the composite tube is obtained; as an option, the area of the parts of the outer wall of the inner tube body that are in close contact with the inner wall of the stainless steel outer tube is greater than 50% of the area of the outer wall of the inner tube body; specifically, the tube diameter of the stainless steel outer tube 2 is radially compressed by cold drawing to undergo plastic deformation, comprising the following steps:
   step a. when the inner tube body 1 is positioned in the stainless steel outer tube 2 by pressure, the stainless steel outer tube 2 reserves an exposed part; this step is completed by the tube entering equipment;
   step b. the composite tube is placed on the composite tube drawing equipment; the composite tube is driven to move towards the drawing die 43, and the exposed part of the stainless steel outer tube 2 passes through the die hole;
   step c. the pulling mechanism 41 of the composite tube drawing equipment clamps the exposed part of the stainless steel outer tube 2 and pulls the composite tube through the die hole of the drawing die 43; when the stainless steel outer tube 2 is radially compressed so that the whole stainless steel outer tube 2 undergoes plastic deformation, the composite tube passes through the die hole at a constant speed from one end of the composite tube under the driving of the pulling mechanism 41; the composite tube passes through the guide area 52 and the sizing area 53 of the die core successively; the tangent angle α between the two waistlines of the guide area 52 of the die hole is 18°-24°; as an option, the connection between the guide area 52 and the sizing area 53 is a smooth transition; and the diameter of the guide area 52 is not less than that of the sizing area 53; the die hole radially applies a gradually increasing uniform pressure to the stainless steel outer tube 2, so that the stainless steel outer tube 2 undergoes plastic deformation and shrinks; wherein, the length of the sizing area 53 of the die hole is not less than 25 mm, so that after being drawn, by the plastic deformation, the tube diameter of the stainless steel outer tube 2 is reduced, and then the stainless steel outer tube 2 and the outer wall of the inner tube body 1 are partially or completely in close contact with each other; since it is difficult to avoid some unevenness on the tube wall during the production of the inner tube body 1, when the outer wall of the inner tube body 1 and the inner wall of the stainless steel outer tube 2 are partially or completely in close contact with each other, the inner wall of the stainless steel outer tube 2 can be fitted with the outer wall of the inner tube body 1 and adapted to the convex parts and concave parts of the inner tube body 1; that is, the wall thickness of the parts of the stainless steel outer tube 2 corresponding to the convex parts of the inner tube body 1 is smaller than that of the parts of the stainless steel outer tube 2 corresponding to the concave parts of the inner tube body 1, which can improve the close fit between the inner tube body and the stainless steel outer tube 2, and has a significant effect of improving the roundness tolerance of the composite tube.

This embodiment provides a roller body prepared from the above-mentioned composite tube, comprising a composite tube described in any one of the above, and shaft heads fixedly connected to both ends of the composite tube; the shaft head comprises a support shaft 61; the support shaft 61 is axially provided with at least a tube body support member 62; the tube body support member 62 comprises a body; the body is provided with an arc-shaped connecting member 63; one end of the arc-shaped connecting member 63 away from the body is provided with a second support plate 64; the second support plate 64 is inclined to a side away from the support shaft 61 and has an close fit with the inner wall of the composite tube; the roundness tolerance of the composite tube according to the present embodiment is good, and it can be used to prepare a roller body with a length of more than 3 m and with good bending resistance; the roller body can better meet the requirements of downstream equipment (such as ironing machines, spreaders and other linen finishing equipment) with respect to roller body jumping; the arc-shaped connecting member 63 of the support shaft 61 has an elastic effect; the second support plate 64 can support the tube and can be adapted to the change of the tube diameter of the inner wall of the tube by the elastic effect of the arc-shaped connecting member 63; it can facilitate the installation of the shaft heads; the interference fit can help increase the friction between the shaft heads and the inner tube, preventing the shaft heads from falling off the tube body; when the second support member 32 is in an interference fit with the inner tube, it can prevent the second support plate 64 from deforming the tube, maintain the roundness tolerance of the tube, and prevent the inner tube from being deformed during use; further, it can facilitate changing the surface finish according to the application conditions of the existing equipment by the stainless outer tube 2; and the roller body can be used for preparing any one of an ironing machine, a spreading machine, a cloth feeding machine, a folding machine, and a stacking machine.

### Embodiment 2:

The diameter of a composite tube is 40-200 mm; the length is 3-15 m; the composite tube comprises an inner tube body 1 and a stainless steel outer tube 2 wrapping around the outside of the inner tube body 1; the tube diameter difference between the inner diameter of the stainless steel outer tube 2 and the outer diameter of the inner tube body 1 is less than or equal to 1 mm, and the requirement that the roundness tolerance of the outer diameter of the composite tube is not greater than 0.3 mm is satisfied;

In practical use, the diameter of the composite tube can be selected from 40 mm, 50 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 140 mm, 150 mm, 160 mm, 170 mm, 180 mm, 200 mm or other specifications;

When the wall thickness of the composite tube is 4-6 mm, the roundness tolerance of the composite tube is controlled to be less than or equal to 0.1 mm; when the wall thickness of the composite tube is 7-10 mm, the roundness tolerance of the composite tube is controlled to be less than or equal to 0.15 mm; for example, when the wall thickness of the composite tube is 5 mm, the roundness tolerance of the composite tube is controlled to be 0.08 mm; when the wall thickness of the composite tube is 5.5 mm, the roundness tolerance of the composite tube is controlled to be 0.1 mm; when the wall thickness of the composite tube is 6 mm, the roundness tolerance of the composite tube is controlled to be 0.11 mm; when the wall thickness of the composite tube is 7 mm, the roundness tolerance of the composite tube is controlled to be 0.12 mm; when the wall thickness of the composite tube is 8.5 mm, the roundness tolerance of the composite tube is controlled to be 0.13 mm; by controlling the roundness tolerance of the composite tube to be no greater than 0.3 mm, preferably no greater than 0.15 mm, a high-quality and high-precision roller body with a small jump amplitude can be prepared; meanwhile, the tube diameter difference between the inner diameter of the stainless steel outer tube 2 and the outer diameter of the inner tube body 1 is less than or equal to 1 mm, so that the outer wall of the inner tube body 1 and the inner wall of the stainless steel outer tube 2 can be partially or completely in close contact with each other, eliminating the deformation that the stainless steel outer tube 2 may undergo when in use.

The above description is only preferred embodiments of the present application and an explanation of the applied technical principles. Those skilled in the art should understand that the scope of the invention involved in this application is not limited to the technical solution formed by specific combinations of the above-mentioned technical features, and should also cover other technical solutions formed by any combination of the above-mentioned technical features or their equivalent features without departing from the inventive concept; for example, the above features and the features disclosed in this application (but not limited thereto) have similar functions.

## Claims

1. A composite tube, **characterized by** comprising:
an inner tube body and a stainless steel outer tube wrapping around the outside of the inner tube body;
wherein the tube diameter difference between the inner diameter of the stainless steel outer tube and the outer diameter of the inner tube body is less than or equal to 1 mm, and the roundness tolerance of the outer diameter of the composite tube is not greater than 0.3 mm.

2. The composite tube according to claim 1, **characterized in that**, the outer wall of the inner tube body and the inner wall of the stainless steel outer tube are partially or completely in close contact with each other, and the roundness tolerance of the outer diameter of the composite tube is not greater than 0.2 mm.

3. The composite tube according to claim 1, **characterized in that**, the diameter of the composite tube is 40-200 mm; wherein the wall thickness is 4-10 mm; wherein the roundness tolerance is not greater than 0.15 mm.

4. The composite tube according to any one of claims 1-3, **characterized in that**, the wall thickness of the stainless steel outer tube is 0.3-3 mm, and the wall thickness of the inner tube body is not less than 2.5 mm.

5. The composite tube according to claim 1, **characterized in that**, the area of the parts of the outer wall of the inner tube body which are in close contact with the inner wall of the stainless steel outer tube is greater than 50% of the area of the outer wall of the inner tube body.

6. The composite tube according to claim 1, **characterized in that**, the length of the composite tube is 3-15 m.

7. A composite tube preparation device, **characterized by** comprising a tube entering equipment for a composite tube and a composite tube drawing equipment;
wherein the tube entering equipment comprises a first support member, a second support member, and a tube body pushing device; the first support member and the second support member are axially arranged; the first support member is provided with a groove for placing an inner tube or a stainless steel outer tube; one end of the groove away from the second support member is provided with a base; one end of the base close to the second support member is provided with a tube entering end; the cross-sectional area of the tube entering end gradually decreases from the end being close to the base to the other end; the tube body pushing device can push the inner tube or the stainless steel outer tube to move, so that a relative displacement occurs between the inner tube and the stainless steel outer tube, and the inner tube body is positioned in the stainless steel outer tube;
wherein the composite tube drawing equipment comprises a pulling mechanism, a drawing frame, and a drawing die arranged on the drawing frame;
wherein the drawing die comprises a die sleeve and a die core; the die core is provided with a die hole; the die hole comprises a guide area with a conical structure and a sizing area connected with the guide area;
wherein the angle between the two waistlines of the guide area is 18°-24°, and the length of the sizing area is 25-110 mm.

8. A process for preparing a composite tube, **characterized by** comprising:
step 1: an inner tube body is positioned in a stainless steel outer tube by pressure; wherein the ductility of the stainless steel outer tube is greater than that of the inner tube body, and the tube diameter difference between the inner tube body and the stainless steel outer tube is not greater than 1 mm;
step 2: the stainless steel outer tube is radially compressed, so that the whole stainless steel outer tube undergoes plastic deformation; by the plastic deformation, the tube diameter of the stainless steel outer tube is reduced, and then the stainless steel outer tube and the outer wall of the inner tube body are partially or completely in close contact with each other; and the roundness tolerance of the composited tube body is kept no more than 0.3 mm, then the composite tube is obtained.

9. The process for preparing a composite tube according to claim 8, **characterized in that**, the tube diameter of the stainless steel outer tube is radially compressed by cold drawing to undergo plastic deformation, comprising the following steps:
a. when the inner tube body is positioned in the stainless steel outer tube by pressure, the stainless steel outer tube reserves an exposed part;
b. the composite tube is placed on a composite tube drawing equipment; the composite tube is driven to move towards a drawing die, and the exposed part of the stainless steel outer tube passes through a die hole;
c. a pulling mechanism of the composite tube drawing equipment clamps the exposed part of the stainless steel outer tube, pulls the composite tube through the die hole of the drawing die, and radially compresses the stainless steel outer tube so that the whole stainless steel outer tube undergoes plastic deformation; the length of a sizing area of the die hole is not less than 25 mm, so that after being drawn, the tube diameter of the stainless steel outer tube is reduced by the plastic deformation, and then the stainless steel outer tube and the outer wall of the inner tube body are partially or completely in close contact with each other.

10. The process for preparing a composite tube according to claim 8, **characterized in that**, when the stainless steel outer tube is radially compressed so that the whole stainless steel outer tube undergoes plastic deformation, under the driving of a pulling mechanism, the composite tube passes through a die hole at a constant speed from one end of the composite tube; the die hole radially applies a gradually increasing radial pressure to the stainless steel outer tube, so that the tube diameter of the stainless steel outer tube is reduced.

11. The process for preparing a composite tube according to claim 8, **characterized in that**, when the inner tube body is positioned in the stainless steel outer tube by pressure, the stainless steel outer tube reserves an exposed part, comprising: one end of the inner tube body is located inside a corresponding end of the stainless steel outer tube; the corresponding end of the stainless steel outer tube is not filled with the inner tube body, and is pressed to form a flat exposed part; the width of the exposed part is not greater than the tube diameter of the stainless steel outer tube.

12. A roller body, **characterized by** comprising a composite tube according to any one of claims 1-6, and shaft heads fixedly connected to both ends of the composite tube; wherein the shaft head comprises a support shaft; wherein the support shaft is axially provided with at least a support member; wherein the support member comprises a body; wherein the body is provided with an arc-shaped connecting member; wherein one end of the arc-shaped connecting member away from the body is provided with a second support plate; wherein the second support plate is inclined to a side away from the support shaft and has an interference fit with the inner wall of the composite tube.

13. Any one of an ironing machine, a spreading machine, a cloth feeder, a folding machine, or a stacking machine using a roller body according to claim 12.
